# EUROPÄISCHE PATENTSCHRIFT

(11) **EP 1 023 878 B1**
(45) Veröffentlichungstag und Bekanntmachung des Hinweises auf die Patenterteilung: **28.02.2007**
(21) Anmeldenummer: 99124329.6
(22) Anmeldetag: 06.12.1999
(51) Int. Cl.: A61C 19/00, F16M 13/04

(54) **Cliphaltevorrichtung**
Clip holding device
Support comportant une pince

(30) Priorität: 26.01.1999 DE 19903019
(43) Veröffentlichungstag der Anmeldung: 02.08.2000
(73) Patentinhaber: Ivoclar Vivadent AG, 9494 Schaan (LI)
(72) Erfinder: Müller, Frank, 6800 Feldkirch (AT)
(74) Vertreter: Baronetzky, Klaus

(56) Entgegenhaltungen:
- US-A- 5 016 795
- US-A- 5 169 315
- US-A- 5 368 482
- US-A- 5 664 711

## Beschreibung

Die Erfindung betrifft eine Cliphaltevorrichtung, insbesondere für Dentalmaterialien, die für das Anstecken an einen Körperteil geeignet ist, gemäß dem Oberbegriff von Anspruch 1.

Eine derartige Cliphaltevorrichtung ist aus der US-PS 5,368,482 bekannt. Diese bekannte Cliphaltevorrichtung weist eine im wesentlichen konische Haltevorrichtung auf, in die ein Schwamm zum Säubern von bei der Behandlung mit Dentalmaterialien entstehenden Verunreinigungen einsteckbar ist. Zusätzlich ist über eine Haltezunge ein Haltedraht etwa halbkreisförmig gebogen. In diesen Haltedraht ist eine für einen Patienten vorgesehene prophylaktische Paste einbringbar.

Diese Lösung ist im Grunde gut geeignet, wenn der Zahnarzt gezielt für einen Patienten eine Paste benötigt. Die Behandlung erfordert jedoch häufig auch weitere Substanzen, so daß die Aufnahmemulde gemäß der genannten US-Patentschrift gewechselt werden müßte, um insofern eine Anpassung zu ermöglichen.

Andererseits neigt der flache Metallstreifen, der die Aufnahme für das Dentalmaterial bildet, dazu, eingeleitete Schwingungen zumindest nicht zu unterdrücken, so daß die Gefahr besteht, daß der Bediener, also regelmäßig der behandelnde Zahnarzt, Teile des in der Mulde aufgenommenen Dentalmaterials verliert, was insbesondere aufgrund der so entstehenden Verunreinigungen unerwünscht ist.

Aus der US-A- 5 664 711 ist eine Cliphaltevorrichtung bekannt, bei der eine Kosmetikflasche zwischen Zeigefinger und Daumen aufhängbar ist.

Ferner ist es bereits vorgeschlagen worden, Fingerclipse mit kleinen Mulden vorzusehen, die mit unterschiedlichen Dentalmaterialien befüllt werden können. Die Befüllung erfolgt hierbei aus Großgebinden, und der Zahnarzt kann wahlweise nacheinander die entsprechenden Substanzen entnehmen und in die Mulde einbringen, oder es werden mehrere Fingerclipse angesteckt, beispielsweise insgesamt drei, die dann je mit den unterschiedlichen Dentalmaterialien gefüllt werden. Nachteilig hierbei ist die Möglichkeit, daß die in Großgebinden angelieferten Dentalmaterialien durch die Bestecke zum Nachfüllen verunreinigt werden, wenn versehentlich das Nachfüllbesteck eines Materials in das Gebinde eines anderen Materials eingetaucht wird. Zudem besteht auch eine gewisse Gefahr, daß die Dentalmaterialien verwechselt werden, insbesondere, wenn der Zahnarzt nicht regelmäßig genau den gleichen Ansteckort für den betreffenden Fingerclips verwendet. ,

Nachteilig bei den bekannten Cliphaltevorrichtungen ist aber insbesondere, daß die aufgenommenen Dentalmaterialien nicht besonders gut gelagert sind. Dies ist insbesondere deswegen relevant, da die Abstützung an einem Finger ohnehin in der Praxis eine nicht ruhende Aufbewahrung erwarten läßt, so daß es beispielsweise bisher überhaupt nicht in Frage kommt, Flüssigkeiten auf diese Weise für die Darreichung anzubieten.

Demgegenüber liegt der Erfindung die Aufgabe zugrunde, eine Haltevorrichtung gemäß dem Oberbegriff von Anspruch 1 zu schaffen, die besonders gut geeignet ist, erschütterungsarm und verunreinigungssicher Dentalmaterialien, auch als Single-Dose-Einheiten, aufzunehmen und ergonomisch günstig zu handhaben.

Diese Aufgabe wird erfindungsgemäß durch Anspruch 1 gelöst. Vorteilhafte Weiterbildungen ergeben sich aus den Unteransprüchen.

Bei einer erfindungsgemäßen Cliphaltevorrichtung ist zunächst besonders günstig, daß vorbereitete Dentalmaterialeinheiten einfach eingesteckt werden können, ohne daß die Gefahr besteht, daß bereits beim Einstecken eine Verunreinigung eintritt. Hierbei kommt die unmittelbare Ausgestaltung der Lagerausnehmung als Teil des Grundkörpers zum Tragen, eine wacklige Verbindung über einen Blechstreifen entfällt, so daß auch beim seitlichen Anstoßen an die Lagerausnehmung die eingeleiteten Schwingungen von dem Grundkörper und dem fest mit diesem über den Halteclips verbundenen Finger oder sonstigen Körperteil, nicht aber von der Dentalmaterialeinheit selbst abgefangen werden müssen. Die Lagerausnehmung schützt und umgibt praktisch einen Haltekragen der Dentalmaterialeinheit, so daß diese bevorzugt in seitlicher Richtung zurücktritt.

Ein besonders günstiger Gesichtspunkt läßt sich auch bei Ausgestaltung der Dentalmaterialeinheiten als längliche Kapseln realisieren: aufgrund der sich länglich nach unten erstreckenden Ausgestaltung können sogar Flüssigkeiten dargeboten werden. Hierzu ist es bevorzugt, den Befüllungsgrad auf maximal beispielsweise 75% der Höhe der Dentalmaterialeinheit zu begrenzen.

Beispielsweise kann eine Dentalmaterialeinheit als kapselartiges Röhrchen mit einer Höhe von 2 cm und einem Außendurchmesser von 5 mm ausgebildet sein. Die Entnahme der Flüssigkeit erfolgt dann in an sich bekannter Weise über einen Pinsel oder ein ähnliches Handhabungswerkzeug. Bei einem derart aufgenommenen Dentalmaterial reicht in der Regel bereits die Oberflächenspannung der Flüssigkeit aus, um ein Auslaufen zu verhindern, der Innendurchmesser der Kapsel kann beispielsweise 3 oder 4 mm betragen. Jedenfalls ist die Aufnahme aufgrund der engen und tiefen Ausgestaltung der Dentalmaterialeinheit besonders verschüttsicher, und zwar auch,-wenn pulverförmige Dentalmaterialien aufgenommen werden.

Gerade pulverförmige Materialien neigen bei Einleitung von Schwingungen dazu, aufgewirbelt zu werden, so daß die umgebende Luft und damit auch die Zahnarztpraxis insgesamt Verunreinigungen ausgesetzt ist.

Diese Verunreinigungen lassen sich in besonders günstiger Weise dadurch vermeiden, daß die Dentalmaterialeinheit sicher abgestützt aufgenommen ist. Gemäß einer vorteilhaften Ausgestaltung ist es vorgesehen, daß die Dentalmaterialeinheit sich unter Vorspannung seitlich an dem Halteclips abstützt. Bei auf dem Finger aufgesteckten Halteclip wird die Dentalmaterialeinheit damit seitlich etwas weggespreizt, so daß sie einerseits sicher in der Halterausnehmung klemmt, andererseits aber bei von dem Finger abgezogener Cliphaltevorrichtung leicht aus der Lagerausnehmung entnommen werden kann.

In besonders bevorzugter Ausgestaltung sind zwei Dentalmaterialeinheiten hintereinander angeordnet. Die beiden Dentalmaterialeiheiten haben so feste Positionen, erlauben aber dennoch je die sichere und erschütterungsgeschützte Aufnahme mit den vorstehend dargestellten Vorteilen. Durch farbige Kennzeichnung der betreffenden kapselförmigen Röhrchen kann eine Verwechslung mit großer Sicherheit ausgeschlossen werden. Hier ist es zudem besonders günstig, daß die beiden Dentalmaterialeinheiten sich entlang der Achse des Körperteils erstrecken, so daß sie nicht weit vorstehen und von diesem zumindest indirekt abgestützt werden können.

Wenn die erfindungsgemäße Cliphaltevorrichtung auch mit besonderem Schwerpunkt bevorzugt unter Bezugnahme auf die Aufstecken auf einen Finger beschrieben ist, versteht es sich, daß es gemäß einer anderen Ausgestaltung auch vorgesehen sein kann, die Cliphaltevorrichtung auf ein Handgelenk aufzug stecken, wie es beispielsweise auch aus der EP-A2-0 302 004 an sich bekannt ist.

Besonders günstig ist es ferner, daß der Grundkörper und die Haltevorrichtung, und zwar einschließlich der Lagerausnehmungen, als einstückiges Kunststoff-Formteil ausgebildet sein können. Bei dieser Lösung kann dafür Sorge getragen werden, daß keine spitzen Innenecken entstehen, die verschmutzungsanfälliger sind. Durch geeignete Materialwahl kann die Cliphaltevorrichtung auch autoklavierbar bzw. in anderer geeigneter Weise sterilisierbar und/oder dsinfizierbar sein. Zudem ergibt sich eine besonders feste und damit sichere Aufnahme der Dentalmaterialeinheiten. Das Kunststoffteil kann beispielsweise aus einem Stück im Spritzgußverfahren hergestellt sein.

Die Verbindung zwischen der Halterausnehmung und der Dentalmaterialeinheit kann in beliebiger geeigneter Weise ausgebildet sein. Während eine Steckaufnahme, die durch ein seitliches Aufspreizen die gewünschte Klemmwirkung bereithält, von der Handhabung ausgesprochen günstig ist, versteht es sich, daß wahlweise auch andere geeignete Befestigungsmaßnahmen realisiert werden können. So kann die Dentalmaterialeinheit mit einem Klebstoff versehen sein, so daß sie eingeklebt ist, jedoch bei Bedarf aus der Halterausnehmung ausgedrückt werden kann. Ferner kann sie auch eingeschraubt sein, wobei ein eher grobes und damit leichter zu reinigendes Gewinde bevorzugt ist. Schließlich kann auch eine Schnapp-/Rastverbindung zwischen Halterausnehmung und Dentalmaterialeinheit vorgesehen sein. Ferner ist es nicht erforderlich, daß die Halterausnehmung die Dentalmaterialeinheit vollständig umgibt; eine Abstützung insofern, daß auch beim seitlichen Anstoßen die Dentalmaterialeinheit sich nicht aus der Halterausnehmung löst, ist vielmehr im Grunde ausreichend, wobei eine kreisringförmige Abstützung jedoch bevorzugt ist.

Gemäß einer ebenfalls günstigen Ausgestaltung weist die Dentalmaterialvorrichtung zudem einen Haltekragen auf, dessen Durchmesser etwas größer als der Innendurchmesser der Halterausnehmung ist, so daß die Dentalmaterialeinheit nur um die Höhe des Haltekragens gegenüber dem Grundkörper der Cliphaltevorrichtung vorspringt.

Erfindungsgemäß besonders günstig ist es ferner, daß die Ausgestaltung der erfindungsgemäßen Cliphaltevorrichtung eine körpernahe Aufnahme für Dentalmaterialien bietet. Die Dentalmaterialien erstrecken sich praktisch L-förmig an zwei Tangenten des Körperteils, insbesondere also des Fingers, an diesem entlang, und werden dort geführt. Hierdurch ergibt sich eine gute Abstützung, aber insbesondere auch ein Schutz vor Anstoßen, nachdem das Vorsprungmaß gegenüber dem Finger auf das minimal Notwendige reduziert ist.

Es versteht sich, daß die erfindungsgemäße Ausgestaltung nicht auf die Realisierung von zwei Dentalmaterialeinheiten in entsprechenden Lagerausnehmungen beschränkt ist. Beispielsweise können sich auch mehrere Lagerausnehmungen bevorzugt in Reihe zueinander, als parallel zur Längsachse des Körperteils, erstrecken. Auch ist es möglich, Lagerausnehmungen beidseitig des Fingers oder sonstigen Körperteils vorzusehen, so daß die Dentalmaterialien den Finger sogar U-förmig umgeben. Bei dieser Ausgestaltung läßt sich der Halteclip bevorzugt nicht seitlich auf den Finger aufclipsen, sondern aufstecken.

Weitere Einzelheiten, Vorteile und Merkmale ergeben sich aus der nachfolgenden Beschreibung eines Ausführungsbeispiels anhand der Zeichnungen.

Es zeigen:
- Fig. 1: eine Seitenansicht einer erfindungsgemäßen Haltevorrichtung;
- Fig. 2: eine Seitenansicht der Ausführungsform gemäß Fig. 1, jedoch von einer anderen Warte betrachtet;
- Fig. 3: eine Draufsicht auf die Ausführungsform gemäß Fig. 1; und
- Fig. 4: eine Dentalmaterialeinheit zur Verwendung in einer erfindungsgemäßen Cliphaltevorrichtung, einerseits im Schnitt und andererseits in der Draufsicht.

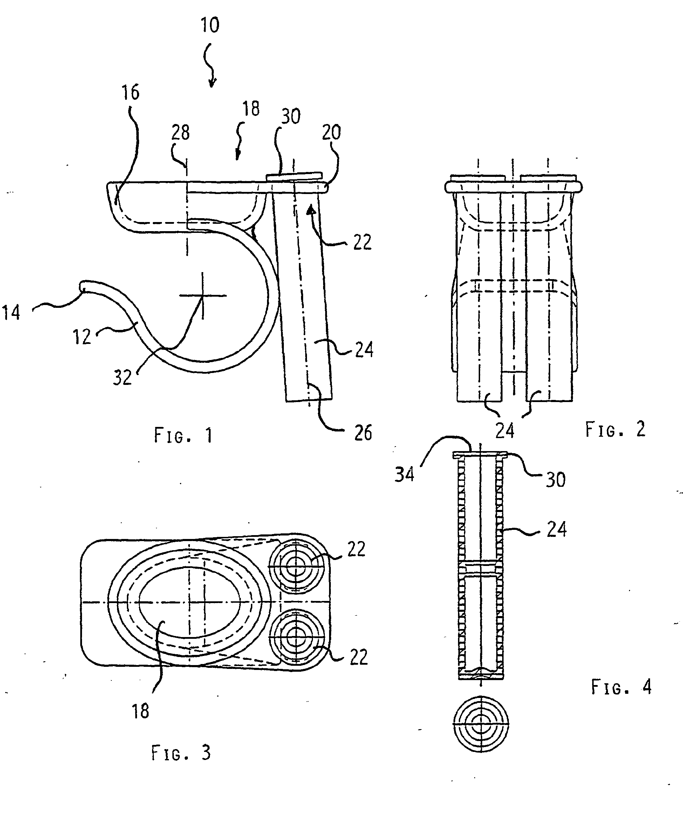

Die in Fig. 1 dargestellte Cliphaltevorrichtung 10 weist einen Halteclips 12 auf, der sich im wesentlichen als Dreiviertelkreis, also über einen Winkelbereich von etwa 270°, erstreckt. Sein freies Ende ist mit einer Aufspreizzunge 14 aufgebogen, während sein anderes Ende einstückig mit einem Grundkörper 16 verbunden ist.

Der Grundkörper 16 weist eine Mulde 18 auf, die für die Aufnahme von Dentalmaterialien geeignet ist. Die Mulde 18 ist recht flach und erstreckt sich im wesentlichen oberhalb der gesamten Breite des Halteclips 12. Der Grundkörper weist ferner einen flachen Flansch 20 auf, der zwei Lagerausnehmungen 22 bildet, die für die Aufnahme von Dentalmaterialeinheiten 24 geeignet ausgebildet sind.

Die Dentalmaterialeinheiten 24 weisen eine Achse 26 auf, die in der dargestellten Position zur Achse 28 der Mulde 18 etwas schräg verläuft. Sie sind durch den Halteclips 12 praktisch vom Finger weggespreizt und damit in den Lagerausnehmungen 22 etwas verkantet. Durch diese Verkantung wird eine verbesserte Lagerung und Befestigung erzeugt, wobei die Verkantungswirkung durch Aufstecken des Halteclipses 12 und das damit verbundene Aufspreizen des Halteclipses auf dem Finger noch verstärkt wird.

Auch ohne Abspreizen ist durch einen Haltekragen 30 verhindert, daß die Dentalmaterialeinheit 24 durch die Lagerausnehmung 22 hindurch fällt.

Bevorzugt ist der Innendurchmesser der Lagerausnehmung 22 etwas größer als der Außendurchmesser der Dentalmaterialeinheit 24, jedoch kleiner als der Durchmesser des Haltekragens 30.

Aus Fig. 2 ist ersichtlich, daß sich bevorzugt zwei Dentalmaterialeinheiten 24 in Richtung der Achse 32 des Körperteils, insbesondere also des Fingers, hintereinander erstrecken. Beide Dentalmaterialeinheiten 24 liegen an dem Halteclips 12 an, wobei es gemäß einer modifizierten Ausgestaltung vorgesehen ist, daß jede Dentalmaterialeinheit 24 unmittelbar an dem Finger anliegt. Aus Fig. 3 ist ersichtlich, daß die Mulde 18 im wesentlichen oval ausgebildet ist. Sie paßt sich in ihrer Breite und Länge gut der Ausgestaltung der erfindungsgemäßen Cliphaltevorrichtung 10 an, so daß einerseits nur ein geringes Vorsprungmaß vorgegeben ist, andererseits die für die Praxis erforderliche Fläche und das Volumen für die Aufnahme von Dentalmaterialien bereitgestellt wird. Hier kann beispielsweise eine Paste oder dergleichen eingesetzt werden, die nicht verschüttgefährdet ist.

Aus Fig. 4 ist ersichtlich, in welcher Weise eine Dentalmaterialeinheit 24 als Kapsel oder als Röhrchen ausgebildet ist. Bevorzugt ist eine vorkonfektionierte Single-Dose-Einheit vorgesehen, die gegebenenfalls auch mit einer Flüssigkeit befüllt sein kann. Die hohe und enge Ausgestaltung der Dentalmaterialeinheit 24 erlaubt eine verschüttsichere Aufnahme auch von Flüssigkeiten, wobei die Kohäsion der Flüssigkeit verhindert, daß auch bei stärkerer Bewegung der Dentalmaterialeinheit 24 die Flüssigkeit aus der Dentalmaterialeinheit 24 herausgelangen kann. Bevorzugt ist die Füllhöhe der Dentalmaterialeinheit 24 gerade bei der Verwendung von Flüssigkeiten begrenzt auf beispielsweise 2/3 der Gesamthöhe.

Gemäß einer bevorzugten Ausgestaltung ist es vorgesehen, die Dentalmaterialeinheit 24 mit einer Schutzfolie an ihrem oberen Ende abzudecken. Die Schutzfolie kann sich über den Haltekragen 30 erstrecken und dort aufgeschweißt sein. Bei Verwendung wird die Schutzfolie 34 dann kurzerhand abgezogen, wobei das Abziehen sowohl erst erfolgen kann, wenn die Dentalmaterialeinheit 24 bereits in die Lagerausnehmung 22 eingesetzt ist, oder bereits zuvor.

## Patentansprüche

1. Cliphaltevorrichtungmit einem Grundkörper (16) sowie einem an dem Grundkörper (16) gelagerten, ringförmigen Halteclips (12), der sich über einen Winkelbereich von etwa 270° erstreckt und an ein Körperteil eines Bedieners unter Vorspannung ansteckbar ist, wobei der Grundkörper (16) wenigstens eine Lagerausnehmung (22) aufweist, in der eine vorbereitetes Dentalmaterial enthaltende Dentalmaterialeinheit (24) aufgenommen ist, welche Dentalmaterialeinheit (24) seitlich an dem Halteclips (12) entlang abgestützt ist.

2. Cliphaltevorrichtung nach Anspruch 1, **dadurch gekennzeichnet, daß** die Dentalmaterialeinheiten (24) als längliche, insbesondere flüssigkeitsgefüllte Kapseln ausgebildet sind.

3. Cliphaltevorrichtung nach Anspruch 1 oder 2, **dadurch gekennzeichnet, dass** der Grundkörper (16) mehrere nebeneinander und, insbesondere in Fingerlängsrichtung betrachtet, hintereinander angeordnete Lagerausnehmungen (22) aufweist.

4. Cliphaltevorrichtung nach einem der vorhergehenden Ansprüche, **dadurch gekennzeichnet, daß** der Grundkörper (16) eine im wesentlichen rechteckige Ausbildung aufweist, wobei sich die Längsachse quer zum Körperteil erstreckt.

5. Cliphaltevorrichtung nach einem der vorhergehenden Ansprüche, **dadurch gekennzeichnet, daß** der Grundkörper (16) eine insbesondere längsovale Mulde (18) aufweist, in welche Dentalmaterialien (24) einbringbar sind und an deren Boden der Halteclips (12) mit dem Grundkörper (16) verbunden ist.

6. Cliphaltevorrichtung nach einem der vorhergehenden Ansprüche, **dadurch gekennzeichnet, daß** der Halteclips (12) eine Breite aufweist, die im wesentlichen der Breite des Grundkörpers (16) entspricht und beispielsweise 1 cm beträgt.

7. Cliphaltevorrichtung nach einem der vorhergehenden Ansprüche, **dadurch gekennzeichnet, daß** die Dentalmaterialeinheit (24) von oben oder von der Seite in die Lagerausnehmung (22) einsteckbar ist und einen Haltekragen (30) aufweist, dessen Durchmesser größer als der Durchmesser der Lagerausnehmung (22) ist.

8. Cliphaltevorrichtung nach einem der vorhergehenden Ansprüche, **dadurch gekennzeichnet, daß** die Dentalmaterialeinheit (24) in der Lagerausnehmung (22) unverlierbar gehalten ist.

9. Cliphaltevorrichtung nach einem der vorhergehenden Ansprüche, **dadurch gekennzeichnet, daß** die Dentalmaterialeinheit (24) einen Rastvorsprung aufweist, über welchen sie in der Lagerausnehmung (22) eingerastet gehalten ist.

10. Cliphaltevorrichtung nach einem der vorhergehenden Ansprüche, **dadurch gekennzeichnet, daß** die Dentalmaterialeinheit (24) außen im wesentlichen zylindrisch ausgebildet ist und die Lagerausnehmung (22) kreisförmig ausgebildet ist, wobei der Innendurchmesser der Lagerausnehmung (22) und der Außendurchmesser der Dentalmaterialeinheit (24) einander im wesentlichen entsprechen und insbesondere eine Klemmpassung zwischen diesen vorgesehen ist.

11. Cliphaltevorrichtung nach einem der Ansprüche 1 bis 7, **dadurch gekennzeichnet, daß** die Dentalmaterialeinheit (24) in die Lagerausnehmung (22) eingeschraubt, eingeklipst oder lösbar eingeklebt ist.

12. Cliphaltevorrichtung nach einem der vorhergehenden Ansprüche, **dadurch gekennzeichnet, daß** die Cliphaltevorrichtung (10) frei von schlecht desinfizierbaren Innenecken ausgebildet ist.

13. Cliphaltevorrichtung nach einem der vorhergehenden Ansprüche, **dadurch gekennzeichnet, daß** die Cliphaltevorrichtung (10) aus gut sterilisier- und desinfizierbarem Kunststoff besteht.

14. Cliphaltevorrichtung nach einem der vorhergehenden Ansprüche, **dadurch gekennzeichnet, daß** der Halteclips (12) einseitig und insbesondere einstückig mit dem Grundkörper (16) verbunden ist.

15. Cliphaltevorrichtung nach einem der vorhergehenden Ansprüche, **dadurch gekennzeichnet, daß** der Halteclips (12) eine Aufspreizzunge (14) aufweist, die nach außen aufgebogen ist, und mit welcher das Einführen des Körperteils in den Halteclips (12) erleichtert ist.

16. Cliphaltevorrichtung nach einem der vorhergehenden Ansprüche, **dadurch gekennzeichnet, daß** die Dentalmaterialeinheit (24) bei auf dem Körperteil aufgestecktem Halteclips (12) unter seitlicher Vorspannung steht.

## Claims

1. A clip holding device, having a base body (16) and, mounted on the base body (16), an annular holding clip (12) which extends over an angular range of approximately 270° and may be slipped with pre-tension onto a body part of an operator, the base body (16) having at least one bearing recess (22) in which a dental material unit (24) containing prepared dental material is received, this dental material unit (24) being supported laterally alongside the holding clip (12).

2. A clip holding device according to Claim 1, **characterised in that** the dental material units (24) are in the form of elongate capsules filled in particular with liquid.

3. A clip holding device according to Claim 1 or 2, **characterised in that** the base body (16) has a plurality of bearing recesses (22) which are arranged next to one another and, as seen in particular in the direction of the length of the finger, behind one another.

4. A clip holding device according to one of the preceding claims, **characterised in that** the base body (16) has a substantially rectangular shape, with the longitudinal axis extending transversely in relation to the body part.

5. A clip holding device according to one of the preceding claims, **characterised in that** the base body (16) has a depression (18) which is in particular in the shape of an elongate oval, into which dental materials (24) may be put and at the bottom of which the holding clip (12) is connected to the base body (16).

6. A clip holding device according to one of the preceding claims, **characterised in that** the width of the holding clip (12) substantially corresponds to the width of the base body (16) and is for example 1 cm.

7. A clip holding device according to one of the preceding claims, **characterised in that** the dental material unit (24) may be inserted into the bearing recess (22) from above or from the side and has a holding collar (30) whereof the diameter is greater than the diameter of the bearing recess (22).

8. A clip holding device according to one of the preceding claims, **characterised in that** the dental material unit (24) is held in the bearing recess (22) such that it cannot come loose.

9. A clip holding device according to one of the preceding claims, **characterised in that** the dental material unit (24) has a latching projection which keeps it latched into the bearing recess (22).

10. A clip holding device according to one of the preceding claims, **characterised in that** the dental material unit (24) is substantially cylindrical in shape on the outside and the bearing recess (22) is circular in shape, with the internal diameter of the bearing recess (22) and the external diameter of the dental material unit (24) substantially corresponding to one another and in particular a clamping fit being created between them.

11. A clip holding device according to one of Claims 1 to 7, **characterised in that** the dental material unit (24) is screwed, clipped or detachably bonded inside the bearing recess (22).

12. A clip holding device according to one of the preceding claims, **characterised in that** the clip holding device (10) is of a form such that it is free of inside corners which are difficult to disinfect.

13. A clip holding device according to one of the preceding claims, **characterised in that** the clip holding device (10) is made from synthetic material which is easy to sterilise and disinfect.

14. A clip holding device according to one of the preceding claims, **characterised in that** the holding clip (12) is connected to the base body (16) on one side and in particular in one piece therewith.

15. A clip holding device according to one of the preceding claims, **characterised in that** the holding clip (12) has a tongue (14) for spreading open which is bent outwardly open and which makes it easier to insert the body part into the holding clip (12).

16. A clip holding device according to one of the preceding claims, **characterised in that** the dental material unit (24) is under lateral pre-tension when the holding clip (12) is pushed onto the body part.

## Revendications

1. Dispositif de maintien par clip, avec un corps de base (16) ainsi qu'un clip de maintien (12) de forme circulaire, fixé au corps de base (16), qui s'étend sur une plage angulaire d'environ 270° et peut être attaché à une partie du corps d'un utilisateur sous précontrainte, le corps de base (16) présentant au moins un évidement (22) dans lequel une unité de matériel dentaire (24) contenant du matériel dentaire préparé peut être logée, laquelle unité de matériel dentaire (24) étant en appui latéralement le long du clip de maintien (12).

2. Dispositif de maintien par clip selon la revendication 1, **caractérisé en ce que** les unités de matériel dentaire (24) sont conçues sous forme de capsules allongées, en particulier remplies de liquide.

3. Dispositif de maintien par clip selon la revendication 1 ou 2, **caractérisé en ce que** le corps de base (16) présente plusieurs évidements (22) disposés les uns à côté des autres et, en particulier les uns derrière les autres dans le sens longitudinal des doigts.

4. Dispositif de maintien par clip selon l'une des revendications précédentes, **caractérisé en ce que** le corps de base (16) présente une forme essentiellement rectangulaire, l'axe longitudinal s'étendant transversalement par rapport à la partie du corps.

5. Dispositif de maintien par clip selon l'une des revendications précédentes, **caractérisé en ce que** le corps de base (16) présente une cavité (18) en particulier oblongue, dans laquelle des matériels dentaires peuvent être chargés et au fond de laquelle le clip de maintien (12) est rattaché au corps de base (16).

6. Dispositif de maintien par clip selon l'une des revendications précédentes, **caractérisé en ce que** le clip de maintien (12) présente une largeur, qui correspond essentiellement à la largeur du corps de base (16) et correspond par exemple à 1 cm.

7. Dispositif de maintien par clip selon l'une des revendications précédentes, **caractérisé en ce que** l'unité de matériel dentaire (24) peut être insérée dans l'évidement (22) par le haut ou par le côté et présente un rebord de maintien (30) dont le diamètre est supérieur au diamètre de l'évidement (22).

8. Dispositif de maintien par clip selon l'une des revendications précédentes, **caractérisé en ce que** l'unité de matériel dentaire (24) est fixée de manière imperdable dans l'évidement (22).

9. Dispositif de maintien par clip selon l'une des revendications précédentes, **caractérisé en ce que** l'unité de matériel dentaire (24) présente une saillie d'encliquetage par l'intermédiaire de laquelle elle est maintenue dans l'évidement (22) en étant encliquetée.

10. Dispositif de maintien par clip selon l'une des revendications précédentes, **caractérisé en ce que** l'unité de matériel dentaire (24) présente une forme extérieure essentiellement cylindrique et l'évidement (22) présente une forme circulaire, le diamètre intérieur de l'évidement (22) et le diamètre extérieur de l'unité de matériel dentaire (24) correspondant sensiblement l'un à l'autre, un ajustement par serrage entre ces deux diamètres étant en particulier prévu.

11. Dispositif de maintien par clip selon l'une des revendications 1 à 7, **caractérisé en ce que** l'unité de matériel dentaire (24) est vissée, clipée ou collée de façon détachable dans l'évidement (22).

12. Dispositif de maintien par clip selon l'une quelconque des revendications précédentes, **caractérisé en ce que** le dispositif de maintien par clip (10) est conçu sans coins intérieurs difficilement désinfectables.

13. Dispositif de maintien par clip selon l'une des revendications précédentes, **caractérisé en ce que** le dispositif de maintien par clip (10) se compose de matière plastique facilement stérilisable et désinfectable.

14. Dispositif de maintien par clip selon l'une des revendications précédentes, **caractérisé en ce que** le clip de maintien (12) est rattaché au corps de base (16) d'un côté et en particulier de façon monobloc.

15. Dispositif de maintien par clip selon l'une des revendications précédentes, **caractérisé en ce que** le clip de maintien (12) présente une languette d'expansion (14) qui est courbée vers l'extérieur et avec laquelle l'introduction de la partie du corps dans le clip de maintien (12) est facilitée.

16. Dispositif de maintien par clip selon l'une des revendications précédentes, **caractérisé en ce que** l'unité de matériel dentaire (24) est sous précontrainte latérale lorsque le clip de maintien (12) est attaché à la partie du corps.
